# EUROPEAN PATENT APPLICATION

(11) **EP 1 089 536 A1**
(43) Date of publication of application: **04.04.2001**
(21) Application number: 00402621.7
(22) Date of filing: 21.09.2000
(51) Int. Cl.: H04M 11/06, H01R 24/04, H01R 13/719

(54) **Line Bridging pots/DSL filter/splitter**

(30) Priority: 29.09.1999 US 408324
(71) Applicant: HARRIS CORPORATION, Melbourne Florida 32919 (US)
(72) Inventor: Zoiss, Edward, Moorpark, California 93021 (US)
(74) Representative: Ballot, Paul

(57) **Abstract**

A portable stand-alone, POTS/data filter/splitter device provides non data-intrusive line-bridging connectivity between a craftperson's test set and a metallic line (tip and ring) pair. A data/audio filter prevents corruption of data signals to provide the craftperson with POTS access to the line. The POTS/data device includes a Y-shaped housing containing respective port sections, terminal ends of which contain a line jack, an audio/voice jack, and a data jack. A printed circuit board containing a voice/data isolation filter is installed in the housing and is interfaced with each of the line, voice and data jacks, as well as a set of line-attachment leads at the line jack The POTS/data filter/splitter device allows placement of a POTS call from the test set during, but without interfering with, the line's transport of digital data signals.

## Description

The present invention relates in to telecommunication systems and components, and is particularly directed to a portable, filter/splitter device, that facilitates line-bridging connectivity between a craftperson's test set and a metallic line pair, and is configured to prevent corruption of data signals that may be present on the line, while providing the craftperson with POTS access to the line.

Ongoing advances in waveform structures and signal processing technology have enabled telecommunication service providers to offer their customers a variety of signal transport capabilities, in addition to traditional plain old telephone service (POTS). As a n example, asymmetric digital subscriber line (ADSL) signaling allows both traditional (relatively low frequency (e.g., 300 Hz - 4000 Hz)) POTS voice traffic and (higher band (e.g., 20 KHz - 1.5 MHz) digital data traffic to be simultaneously carried over the same copper pair. One of the practical uses of ADSL technology is continuous internet access, while still allowing placement of a POTS call.

In order to maintain frequency band separation between POTS and digital data, ADSL modem components that terminate the link (at the central office and at the customer premises) are customarily provided with internal filter circuits that are coupled to respective POTS and data interface ports. When a problem in the operation of such a hybrid signaling circuit requires testing of the line and/or equipment, it is customary practice to have a servicing craftperson physically bridge the line with a test (butt) set and then conduct one or more test operations on the line.

Unfortunately, if the craftperson connects his test set to the line under test while the line is carrying data traffic, it can be expected that the bridging connection will cause the data to become corrupted - interrupting or bringing down the data link (e.g., the internet session). Even in those cases where the test set is provided with a data detection and intrusion blocking mechanism, the craftperson will still usually be able to over-ride the data-protection block, so that he may gain access to the line and place a (line test-associated) POTS call.

The present invention includes a device for providing signal transport connectivity between a communication unit and a communication line comprising a housing having a line-coupling port configured to be connectable to said communication line, an audio port configured to interface audio signals, and data port configured to interface data signals, characterized in that a filter within said housing and coupled in circuit with said line-coupling port, said audio port and said data port, said filter being operative to interface with said data port, data signals that are coupled to said line-coupling port from said communication line, and to interface with said line-coupling port to said communication line, audio signals supplied from said communication unit to said audio port, so as to provide mutual isolation between said audio and data ports.

This effectively unavoidable corruption of the data traffic associated with the conventional bridging of the line by a craftperson's test set is substantially mitigated by means of a portable, hand-held and self-contained POTS/data splitter device through which the technician may non-intrusively connect to the line. In accordance with a preferred embodiment, the POTS/data splitter device has a Y-shaped housing made of resilient plastic material, in which a printed circuit filter board that conforms with the Y-shape of the housing is installed.

Mounted at an end of a base leg portion of the Y-shaped printed circuit board is a line jack and a pair of line-attachment leads, distal ends of which are provided with elements, such as alligator clips, for connecting the line-attachment leads to tip and ring conductors of a line under test. The line jack the line-attachment leads are coupled to a dual band port of a POTS/data-splitting filter and surge protection circuit formed on the printed circuit board. A voice/audio jack is mounted to an end of one of the Y-branches of the printed circuit board. A pair of terminals which serve as connection points for damping elements, such as alligator clips affixed to ends of test set leads, are disposed at the outer edge of the printed circuit board adjacent to the voice jack. In a similar manner, a data jack and an associated pair of clamping terminals are disposed at an end of the other Y-branch of the printed circuit board. The voice jack and its adjacent pair of terminals are coupled to a low (voice) frequency pass band port of the filter circuit, while the data jack and its pair of adjacent terminals are coupled to a high (data) frequency pass band port of the filter circuit.

The hand-held filter/splitter of the invention ensures POTS connectivity between a craftperson's test set and a metallic line pair without corrupting data signals that may be present on the line. When using the filter/splitter, the craftperson may connect the alligator clips of the line-bridging leads to the respective tip and ring lines of the circuit under test. Alternatively, if a multipin jack connection for the line under test is available it may be plugged into the line jack.

The invention also includes a method method of providing signal transport connectivity between a craftperson's test set and a communication line, over which plain old telephone service (POTS) signals lying in a first frequency band, and digital data signals lying in a second frequency band spectrally spaced apart from said first frequency band, are simultaneously transportable, said method characterized by the steps of:
(a) providing a stand-alone POTS/ data splitter device having a line port configured to be connectable to said communication line, an audio port configured to interface audio signals, and data port configured to interface data signals, and a filter coupled in circuit with said line port, said audio port and said data port, said filter being operative to interface with said data port, data signals coupled to said line-coupling port from said communication line, and to interface with said line-coupling port and thereby said communication line, audio signals supplied from said craftperson's test set to said audio port, while providing mutual isolation between said audio and data ports; and
(b) coupling said line port of said POTS/ data splitter device to said communication line, and coupling said craftperson's test set to said audio port of said POTS/ data splitter device; and
(c) placing a POTS call from said craftperson's test set by way of said POTS/data splitter over said communication line, during and without interfering with the transport of digital data signals over said communication line.

The craftperson may then connect his test set to the data jack, or clip test set leads onto the data jack's adjacent terminals and check for the presence of data traffic. He may simultaneously gain POTS access to the line for the purpose of listening for voice signals, or making a POTS call, by connecting his test set to the voice jack. Because the filter circuit isolates the (low frequency) POTS and (high frequency) data bands, the POTS connection to the voice jack allows the craftperson to safely bridge,tip and ring without corrupting data traffic that may be present on the line. This makes it unnecessary for the technician to over-ride the data-protection block that is customarily provided within his test set, so that a POTS call may be placed from the craftperson's test set without bringing down a data session that may be concurrent with his POTS access.

The invention will now be described, by way of example, with reference to the accompanying drawings in which:
Figure 1 is a diagrammatic perspective view of the interior architecture of the portable, hand-held POTS/data splitter device in accordance with the present invention;
Figure 2 is a diagrammatic perspective exterior view of the POTS/data splitter device of Figure 1;
Figure 3 is a diagrammatic side exterior view of the POTS/data splitter device of Figure 1; and
Figure 4 is a schematic of the circuitry of the POTS/data splitter device of Figures 1-3.

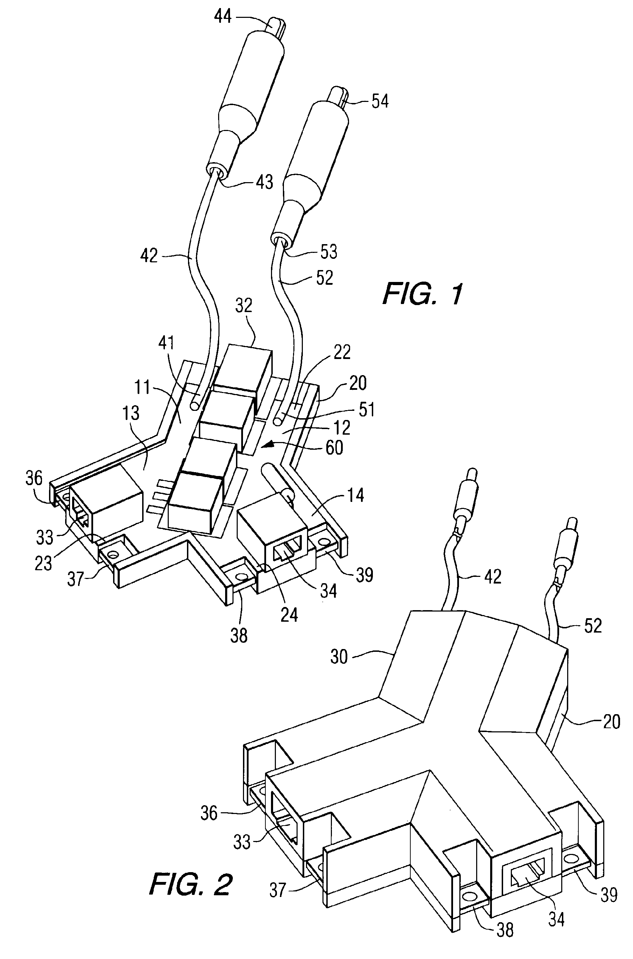

A preferred configuration of the portable, hand-held POTS/data splitter will be described with reference to Figures 1-4. The diagrammatic perspective shows interior view of Figure 1, the splitter comprises a base frame 20 preferably made of a resilient, industrial grade plastic material, that serves as a support for a printed circuit board 11, upon which the filter and surge protection components of the splitter are disposed. Pursuant to a non-limiting, but preferred embodiment, the housing has a 'Y' shape, as viewed in plan. While other shapes may be employed, the use of a Y-shaped architecture serves to facilitate ready identification and connection of a line attachment port, by placing that port at the end of the base or leg of the Y, and using the two 'Y' branches to physically separate voice and data ports of the splitter within reasonably close proximity of one another for ease of attachment to the craftperson's test set.

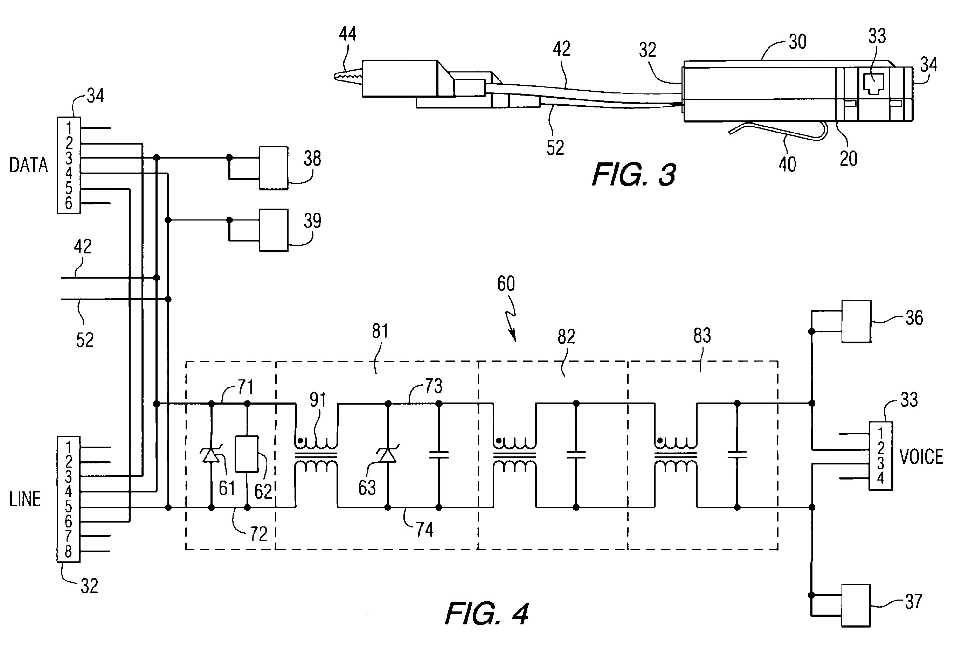

The printed circuit board 11 has a first or base leg portion 12, that is joined to second and third leg portions 13 and 14, which extend therefrom, so as to define a generally Y-shaped board configuration that conforms with and readily fits within retention grooves along interior sidewalls of the Y-shaped base frame 20. A line-coupling jack 32, such as an RJ11 connector, is mounted to the printed circuit board 11 at an outer or terminal end 22 of its base leg portion 12. Disposed adjacent to the jack 32 are respective first terminating ends 41 and 51 of a pair of leads 42 and 52, that connect to tip and ring conductors of the line jack 32. Distal ends 43 and 53 of the leads 42 and 52, respectively, are provided with line engaging elements, such as alligator clips 44 and 54, for connecting the leads 42 and 52 to tip and ring conductors of a line under test. The line-coupling jack 32 and the terminating ends 41 and 51 of the leads 42 and 52 are coupled to a dual band port of a POTS/data-splitting filter and surge protection circuit 60, component details of which are shown in the schematic diagram of Figure 4, to be described. The filter circuit 60 may be disposed on the printed circuit board 11 intermediate the terminal end 22 of the base leg portion 12 and terminal ends 23 and 24 of the Y-branch portions 13 and 14, respectively.

Affixed to the printed circuit board 11 at the terminal end 23 of the Y-branch leg portion 13 is voice jack or port 33, such as an RJ11 connector. Mounted adjacent to the voice jack 33 are a pair of terminals 36 and 37, which serve as connection points for clamping elements, such as alligator clips affixed to ends of leads of the test set. In a like fashion, disposed on the printed circuit board 11 at the terminal end 24 of the Y-branch leg portion 14 is data jack or port 34, such as an RJ11 connector. Also, adjacent to the data jack 34 are a pair of terminals 38 and 39, to provide connection points for clamping elements, such as alligator clips at ends of leads to the tip and ring conductors of the test set. The voice jack 33 and its adjacent pair of terminals 36 and 37 are coupled to the low (voice) frequency pass band port of the filter 60, while the data port jack 34 and its pair of adjacent terminals 38 and 39 are coupled to the high (data) frequency port of filter 60.

Figure 2 shows the base frame of the filter/splitter structure of Figure 1 is closed by means of a resilient molded plastic cover 30 that conforms with the generally Y-shaped configuration of the base frame 20. As a non-limiting example, the adjoining surfaces of the cover 30 and the base frame 20 may be configured to provide a 'snap' together housing architecture for the filter/splitter printed circuit board components retained therein. In addition, or alternatively, closure of the cover 30 and the base frame 20 may be provided by separate fittings, such as screws and the like. Also, shown in Figure 3, a belt clip 40 is be attached to a rear side of the base frame 20.

Figure 4 is a schematic diagram of a non-limiting example of the circuit component architecture that may be used to implement the filter and surge protection circuit employed in the POTS/data splitter of the invention. The filter circuit, shown at 60, includes surge protection components, and a low pass filter that isolates the voice jack/port 33 from the data jack/port 34. Surge protection for tip and ring includes a varactor diode 61 and a gas discharge tube 62 coupled across tip and ring conductors 71 and 72, to which the leads 42 and 52, respectively, and the tip and ring leads of the respective jacks are connected. The conductors 71 and 72 are coupled through cascaded inductor - capacitor (LC) low-pass filter stages 81-82-83 of a low pass filter that isolates the data jack 34 from the voice jack 33. The low pass filter stage 81 also includes a further varactor diode 63 coupled across tip and ring associated leads 73 and 74 that are coupled through a dual wound inductor 91 to the conductors 71 and 72.

An example of the operation of the filter/splitter device of Figures 1-4 is as follows. In the course of troubleshooting a problem in a hybrid data/voice circuit (such as an ADSL line), it may be necessary for the servicing craftperson to connect his test set to the line for conducting one or more tests. To accomplish this task in a manner that is unobtrusive to a data session that may be taking place on the line under test, the craftperson may connect the alligator clips 44 and 45 of the test leads 42 and 52 at the base end 22 of the splitter to the respective tip and ring lines of the circuit under test. Alternatively, if a multipin (RJ-11) jack connection for the line under test is available it may be plugged into the line-coupling jack 32.

The craftperson may then connect his test set to the data jack 34 (or clip on to its adjacent terminals 38 and 39) of the splitter device and check for the presence of data traffic. He may simultaneously gain POTS access to the line for the purpose of listening for voice signals, or making a POTS call, by connecting his test set to the voice signal jack 33 (or clipping on to its adjacent terminals 36 and 37) of the splitter device. Because the filter circuit 60 isolates the POTS and data bands at the two jacks 33 and 34, the POTS connection to the voice signal port 33 allows the craftperson to safely bridge tip and ring via leads 42 and 43 without corrupting data traffic that may be present on the line. This makes it unnecessary for the technician to over-ride the data-protection block that is customarily provided within his test set, as described above, so that a POTS call may be placed from the craftperson's test set without bringing down a data session that may be concurrent with the POTS access.

A portable stand-alone, POTS/data filter/splitter device provides non data-intrusive line-bridging connectivity between a craftperson's test set and a metallic line (tip and ring) pair. A data/audio filter prevents corruption of data signals to provide the craftperson with POTS access to the line. The POTS/ data device includes a Y-shaped housing containing respective port sections, terminal ends of which contain a line jack, an audio/voice jack, and a data jack. A printed circuit board containing a voice/ data isolation filter is installed in the housing and is interfaced with each of the line, voice and data jacks, as well as a set of line-attachment leads at the line jack. The POTS/data filter/splitter device allows placement of a POTS call from the test set during, but without interfering with, the line's transport of digital data signals.

## Claims

1. A device for providing signal transport connectivity between a communication unit and a communication line comprising a housing having a line-coupling port configured to be connectable to said communication line, an audio port configured to interface audio signals, and data port configured to interface data signals, characterized in that a filter within said housing and coupled in circuit with said line-coupling port, said audio port and said data port, said filter being operative to interface with said data port, data signals that are coupled to said line-coupling port from said communication line, and to interface with said line-coupling port to said communication line, audio signals supplied from said communication unit to said audio port, so as to provide mutual isolation between said audio and data ports.

2. A device as claimed in claim 1, characterized in that said housing contains respective housing sections associated with said line-coupling port, said audio port and said data port, including a printed circuit board structure installed in said housing sections and supporting a line jack and line-attachment leads at a terminal end of a first housing section associated with said line-coupling port, an audio jack at a terminal end of a second housing section associated with said audio port, and a data jack at a terminal end of a third housing section associated with said data port, and said filter is disposed on said printed circuit board structure and is connected to said line-attachment leads, said line-coupling jack, said audio jack and said data jack., in which said line-attachment leads are provided with elements that provide electrical attachment to tip and ring conductors of said communication line.

3. A device as claimed in claim 2, characterized in that said housing has a substantially Y-shaped configuration a base of which contains said first housing section, and respective Y-branches of which are formed of said second and third housing sections.

4. A device as claimed in claim 1, characterized in that said filter includes a low-pass, inductor-capacitance filter section coupled between said audio port and each of said line-coupling port and said data port., and in which said communication unit comprises a craftperson test set.

5. A method of providing signal transport connectivity between a craftperson's test set and a communication line, over which plain old telephone service (POTS) signals lying in a first frequency band, and digital data signals lying in a second frequency band spectrally spaced apart from said first frequency band, are simultaneously transportable, said method characterized by the steps of:
(a) providing a stand-alone POTS/ data splitter device having a line port configured to be connectable to said communication line, an audio port configured to interface audio signals, and data port configured to interface data signals, and a filter coupled in circuit with said line port, said audio port and said data port, said filter being operative to interface with said data port, data signals coupled to said line-coupling port from said communication line, and to interface with said line-coupling port and thereby said communication line, audio signals supplied from said craftperson's test set to said audio port, while providing mutual isolation between said audio and data ports; and
(b) coupling said line port of said POTS/ data splitter device to said communication line, and coupling said craftperson's test set to said audio port of said POTS/ data splitter device; and
(c) placing a POTS call from said craftperson's test set by way of said POTS/data splitter over said communication line, during and without interfering with the transport of digital data signals over said communication line.

6. A method as claimed in claim 5, characterized by said stand-alone POTS/data splitter provided in step (a) includes a housing containing respective housing sections associated with said line port, said audio port and said data port, and including a printed circuit board structure installed in said respective housing sections and supporting a line jack and line-attachment leads at a terminal end of a first housing section associated with said line port, an audio jack at a terminal end of a second housing section associated with said audio port, and a data jack at a terminal end of a third housing section associated with said data port, and wherein said filter is disposed on said printed circuit board structure and is connected to said line-attachment leads, said line jack, said audio jack and said data jack, and step (b) comprises coupling said line-attachment leads of said POTS/ data splitter device to said communication line, and coupling said craftperson's test set to said audio jack of said POTS/ data splitter device.

7. A method as claimed in claim 6, characterized by said line-attachment leads are provided with elements that provide electrical attachment to tip and ring conductors of said communication line, and said housing has a substantially Y-shaped configuration a base of which contains said first housing section, and respective Y-branches of which are formed of said second and third housing sections.

8. A method as claimed in claim 5, characterized by said filter includes a low-pass, inductor-capacitance filter section coupled between said audio port and each of said line port and said data port.

9. A method as claimed in claim 6, characterized by said step (b) includes coupling said craftperson's test set to said data port of said POTS/data splitter device, and monitoring said communication line for the presence of data traffic.
